# EUROPEAN PATENT APPLICATION

(11) **EP 3 246 915 A1**
(43) Date of publication of application: **22.11.2017**
(21) Application number: 15877550.2
(22) Date of filing: 12.06.2015
(51) Int. Cl.: G10L 15/00

(54) **VOICE RECOGNITION SYSTEM AND METHOD OF ROBOT SYSTEM**

(30) Priority: 12.01.2015 CN 201510015421
(71) Applicant: Yutou Technology (Hangzhou) Co., Ltd., Hangzhou City, Zhejiang 311199 (CN)
(72) Inventor: CAI, Peng, Hangzhou Zhejiang 311199 (CN); GAO, Peng, Hangzhou Zhejiang 311199 (CN); JIANG, Tao, Hangzhou Zhejiang 311199 (CN); CHENG, Yitang, Hangzhou Zhejiang 311199 (CN); XIANG, Wenjie, Hangzhou Zhejiang 311199 (CN)
(74) Representative: Helbig, Christian
(86) International application number: PCT/CN2015/081409
(87) International publication number: WO 2016/112634

(57) **Abstract**

The invention discloses a voice recognition system for a robot system, wherein comprising: a microphone, configured to real-timely receive a voice signal; a local voice activation detector, configured to detect the voice signal and output it; a local voice recognition module, configured to receive and identify the human voice signal output from the local voice activation detector and output it; a local voice coding module, configured to code the human voice signal and to output it; a remote voice decoding module, configured to receive and decode the output of the voice signal coded by the local voice coding module and output it; a remote voice recognition module and a remote language processing module, wherein the remote voice recognition module receives and transforms the decoded human voice signal output by the remote voice decoding module, and transmits them to the remote language processing module.

## Description

### 1. Field of the Invention

The invention relates to a field of an intelligent voice, especially to a voice recognition system for a robot system and method thereof.

### 2. Description of the Related Art

A voice recognition system for a robot system mainly relates t o two key techniques: the voice recognition technique and the natura 1 language processing technique.

The voice recognition technique, also known as Automatic Speech Recognition (ASR), is aimed at transforming the vocabulary in human language into computer readable input, such as buttons, binary coding or character sequence.

Natural Language Processing Technique (NLP) is a branch of science in artificial intelligence and linguistics, whose main target is to realize effective communication between human and computers with natural language.

The existing common voice recognition systems of robot systems all employ both of the voice recognition technique and the natural language processing technique.

A voice recognition process for a robot system comprises 4 stages: receiving voice, speech recognition, natural language processing and action execution.

The modes of receiving voice in different existing robot systems are different, which can be summarized as follows: 1. non real-time input: only when extra triggered actions, a robot will execute programs. After the confirmation of trigger action, the robot begin to receive the voice input; 2. real-time input: the robot always receives the voice input from the outside, and identifies whether there is any human voice; 3. real-time input: the robot always receives the voice input from the outside, and each voice input needs to be triggered by fixed-statement.

Either way of reception of the voice executes the following procedures: when a robot receives a voice signal, the robot, firstly, by means of voice recognition technique, transforms the voice into computer readable input, which is usually the character sequence, namely, characters; then the robot analyzes and processes the results of the voice recognition with the help of natural language processing technique, so as to obtain the true meaning of the voice signal; finally, the robot reacts to the result of natural language processing correspondingly, executes the command and actions.

There are 3 main disadvantages of the voice recognition system of the existing robot system, which are as follows:
1. Requirement of extra trigger action to initiate the voice communication, which leads to unnecessary interaction in natural way to interact, greatly reducing the degree of user experience.
2. Because there is fixed statement or sentences used by users in most cases, instead of the true natural language for interacting with a robot, the range of application of the fixed statement or sentences is very limited. If a user does not know the fixed statement or sentences, he will have no idea how to interact with the robot.
3. Either inability to realize real-time feedback, or higher energy consumption and lots of spurious triggering, often results in badness of fluency of communication between a user and a robot and unnecessary scrupulousness of the user when he communicates with the robot.

### SUMMARY OF THE INVENTION

Aiming at the problems in the art, which is described above, the invention provides a voice recognition system for a robot system, wherein comprising:
A microphone, configured to real-timely receive a voice signal from outside;
A local voice activation detector, configured to detect the voice signal and identify whether the voice signal includes any human voice; wherein, if the voice signal includes the human voice, it will output a human voice signal.

A local voice recognition module, configured to receive and identify the human voice signal output from the local voice activation detector, so as to determine whether wake-up commands are included in the human voice signal; wherein, if the human voice signal includes the wake-up commands, the local voice recognition module will output the human voice signal including the wake-up commands.

A local voice coding module, configured to code the human voice signal and to output it;

A remote voice decoding module, configured to receive and decode the output of the voice signal coded by the local voice coding module and output it.

A remote voice recognition module and a remote language processing module, wherein the remote voice recognition module receives and transforms the decoded human voice signal output by the remote voice decoding module, and transmits them to the remote language processing module; the remote language processing module generates corresponding operating commands based on the human voice signal which has been transformed.

An execution module, configured to execute the operating command from the remote language processing module.

Said voice recognition system, wherein the microphone is always turned on, for real-timely receiving external voice signal without interruption.

Said voice recognition system, wherein it further comprises a multimedia module, configured to execute the operating command.

Said voice recognition system, wherein the local voice recognition module transmits the human voice signal to the remote voice recognition module via a data stream.

Said voice recognition system, wherein it further comprises a wake-up command edit module, configured to edit the wake-up command.

Said voice recognition system, wherein the local voice activation detector is a voice detector which is based on the neural network algorithm.

Said voice recognition system, wherein the processing time, in which the remote language processing module generates corresponding operating command based on the human voice signal which has been transformed, is within the range of 10∼20ms.

Furthermore, present invention discloses a recognition process, which utilizes the voice recognition system as described above, wherein it comprises:
Utilizing the microphone to real-timely receive a voice signal from outside;
Utilizing the local voice activation detector to identify whether the voice signal includes any human voice; if the voice signal includes the human voice, the local voice activation detector will transmit it to the local voice recognition module;
Utilizing the local voice recognition module to identify the human voice signal, so as to determine whether the human voice signal includes wake-up commands; if the human voice signal includes some wake-up command, the local voice recognition module will further transmit it to the local voice coding module;
After the local voice coding module has coded the human voice signal and output, the local voice coding module will transmit it to the remote voice decoding module;
The remote voice decoding module decodes the received human voice signal, then transmits it to the remote voice recognition module;
Utilizing the remote voice recognition module to transform the human voice signal output by the remote voice decoding module and transmit it to the remote language processing module;
The remote language processing module generates corresponding operating command based on the human voice signal which has been transformed;
The execution module is configured to execute the operating command by taking control of the multimedia module.

A recognition process described above, wherein, if the local voice recognition module finds that current human voice signal includes the wake-up command, the local voice recognition module will be switched off, and the human voice signal will be transmitted to the remote voice decoding module directly, after coded by the local voice coding module; after decoded, it will be transmitted to the remote voice recognition module.

### BRIEF DESCRIPTIONS OF THE DRAWINGS

These and other aspects of the invention will be shown in detail in the figure below. In the figure:

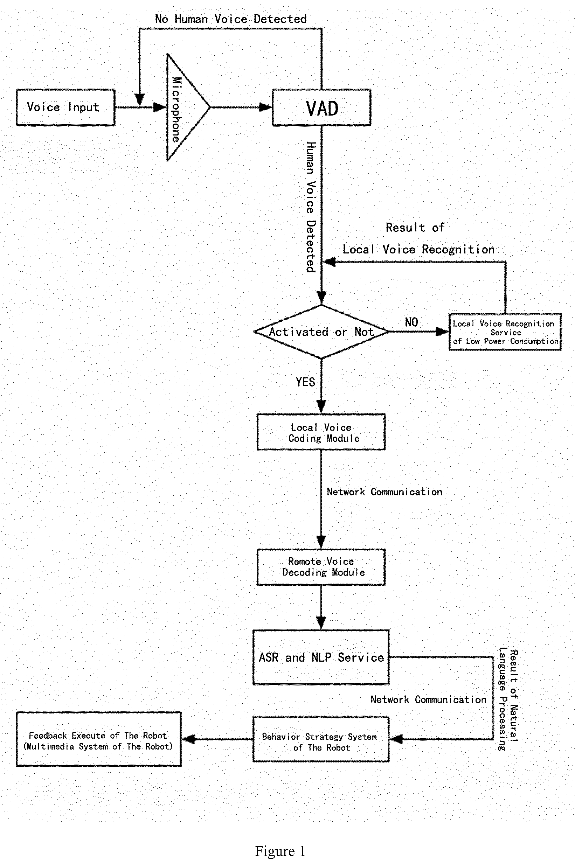

Figure 1 is a flow chart of construction and operation of an embodiment of the voice recognition system according to the invention.

### DETAILED DESCRIPTIONS

The following is the further description of the invention by combining the drawing and the embodiments, and it can not be the limitation for the invention.

The voice recognition system of a robot according to present invention is similar to an ear of a man, which is important for a robot in understanding human language and providing the most natural human-computer interaction experience, so there are 3 problems to be solved as follows: 1. How to completely use voice for communication without any extra trigger action. 2. How to let a user use the natural language to communicate with a robot truly in every field of lives and work, without any fixed statement or sentence. 3. How to maintain acceptable energy consumption, under the circumstances of the achievement of real-time feedback and very little spurious triggering.

To solve the problem described above, the invention provides a voice recognition system for a robot system, wherein comprising:
1. A microphone, configured to receive a voice signal from outside, in the real-time way.
   In a preferable embodiment, the microphone is always turned on, for real-timely receiving external voice signal without interruption. The function of the microphone is collecting voice data from outside, as an ear of the robot system.
2. A local voice activation detector, configured to detect the voice signal and identify whether there is any human voice in the voice signal; if the voice signal includes the human voice, it will output. As a result of the continuous on-state of the microphone of the robot system according to the invention and there are a variety of sounds in the environment, most of which is the noise and the noise is meaningless for the voice recognition of the robot system. To avoid the meaningless performance cost and lots of spurious triggering, the robot system has to analyze and identify the collected voice, only when the robot system finds that the collected voice mainly comes from the human voice (while people speaking), will the system transmit the voice data to the recognition system.
   In a preferable embodiment, the local voice activation detector is a voice detector which is based on the neural network algorithm, which can make a judgement of the input voice data accurately and quickly to find the human voice, and which is a key of avoiding the spurious triggering caused by the ambient noise and of reducing the network and service cost.
3. A local voice recognition module, configured to receive the output of the human voice signal from the local voice activation detector and distinguish it, so as to identify whether there is any wake-up command in the human voice signal; if the human voice signal includes some wake-up command, the local voice recognition module will output. In the robot system according to the invention, even if the local voice activation detector regards the collected voice as the human voice, the human voice may not be valid. In other words, the human voice may not always targetedly be spoken to the robot, thus if the human voice is always uploaded to a server to be analyzed, it will only waste lots of time and performance. As a result, the local fast analysis of the human voice at the very beginning is necessary, which could identify the human voice whether it is targetedly spoken to the robot, just like conversation in human, in which if a person has heard the human voice, he will analyze it and think whether there is anyone talking to him, then make a decision of talking or not.

In the invention, the local voice recognition module which has been specifically optimized, is used to quickly identify the collected natural language whether it is targetedly spoken to the robot, and to update and revise the activated words or phrases optionally at any time (in the robot system according to the invention, it is defined as the name of the robot, which is just like a name of a person or his pet), and the accuracy rate of the identification is up to 90%.

In a preferable embodiment, if the name of the robot is just the wake-up command, the user can use a wake-up command edit module to edit the wake-up command. People can willfully set the name of the robot according to their preferences, leading to convenience and efficiency.
4. A remote voice decoding module is configured to receive the output of the voice signal coded by the local voice coding module and output after decoding.
5. A remote voice recognition module and a remote language processing module, wherein the remote voice recognition module receives the decoded human voice signal output by the remote voice decoding module, and transmits it to the remote language processing module after transforming; the remote language processing module generates corresponding operating command based on the human voice signal which has been transformed.

Wherein, the remote voice recognition module has more complete linguistic model and acoustic model, which can cover more than 90% of commonly used language in daily life, supporting multi-languages, such as English, Chinese, Japanese and so on; especially supporting Chinese dialects, such as Cantonese, Sichuan dialect, Henan dialect and so on. The robot system according to the invention involving professional fields, has the accuracy rate of the voice recognition is up to more than 95% by further optimized. Furthermore, in a preferable embodiment, the local voice recognition module according to the invention transmits the human voice signal to the remote voice recognition module via a data stream. Because the local voice recognition module will initiate the real-time recognition soon after receiving the first frame data, when the voice ends, the result of the recognition of the entire voice has been generated, thus it truly achieves the real-time performance, resulting in that the time from the voice data is sent to the final result of the recognition is generated is no more than 100ms. The remote natural language processing service can cover 80% of the usage scenario in daily life and hit the target all the fields related by the entered natural language, and the processing time is usually 10-20ms. Therefore, in the case of the stable network, the entire procedure of the voice recognition according to the invention only lasts for less than 500ms.
6. An execution module is configured to execute the operating command from the remote language processing module. In a preferable embodiment, the execution module takes control of a multimedia module, which is responsible for the execution of the operating command sent by the remote language processing module, for example, playing music, conducting navigation, sending message, running lights and so on.

User Experience: it is only need to utilize the interactive mode which is the most suitable for human--such as the voice and the natural language. The modules described above, jointly ensure that the robot system according to the invention could completely use the natural language to achieve the real-time input and the real-time feedback, thus the balance between the performance and the power consumption of the system and the stability of the entire system has been guaranteed.

On the other hand, present invention further provides a recognition process, which utilizes the voice recognition system as described above, wherein it comprises:
S1: Utilizing the microphone to receive a voice signal from outside, in the real-time way;
S2: Utilizing the local voice activation detector to identify whether there is any human voice in the voice signal; if the voice signal includes some human voice, the local voice activation detector will transmit it to the local voice recognition module;
S3: Utilizing the local voice recognition module to distinguish the human voice signal, so as to identify whether there is any wake-up command in the human voice signal; if the human voice signal includes some wake-up command, the local voice recognition module will further transmit it to the local voice coding module;
S4: After the local voice coding module has coded the human voice signal, the local voice coding module will transmit it to the remote voice decoding module;
S5: The remote voice decoding module decodes the coded human voice signal, then transmits it to the remote voice recognition module;
S6: Utilizing the remote voice recognition module to transform the human voice signal output by the remote voice decoding module and transmit it to the remote language processing module;
S7: The remote language processing module generates corresponding operating command based on the human voice signal which has been transformed;
S8: The execution module is configured to execute the operating command by taking control of the multimedia module.

In a preferable embodiment, if the local voice recognition module finds that current human voice signal includes the wake-up command, the local voice recognition module will be switched off, and the human voice signal will be transmitted to the remote voice decoding module directly, after coded by the local voice coding module; after decoded, it will be transmitted to the remote voice recognition module.

As shown in Figure 1, if a robot is named as 'R2', and the user of the robot talks to R2: "R2, I feel down in the dumps, please play some music", here the voice data received by the microphone which is always turned on, is transmitted to the local voice activation detector; and now the local voice activation detector finds it is the human voice instead of the ambient noise, but the robot still does not know whether the user is talking to R2, accordingly the human voice will be sent to the local voice recognition module for identification; very soon, the local voice recognition module finds that the user is talking to R2, as its name 'R2' has been called, and confirms that the sentence said by the user is a command to it. For comprehending the meaning of the sentence, at first, the voice would be coded by the local voice coding module, then would be transmitted to the remote voice decoding module via network, for being decoded. Then, the remote voice recognition module receives the decoded human voice signal output by the remote voice decoding module, for recognition and analysis of the natural language, concluding that the meaning of the sentence and what the user wants to express is that "bad mood, need some music". After that, the conclusion would be transmitted to a behavior strategy system of the robot (making a decision that how to take an action or a response); the robot decides to play some healing music for the user, and sends this decision to the local system. Finally, based on the received decision, the local system would find some healing music and start to play them.

In conclusion, the technical solution in the invention can completely use voice to communicate, without any extra trigger action; at the same time, the technical solution described above ensures that a user can communicate with a robot by the true natural language, instead of fixed statement or sentences, in every field of lives and work, maintaining acceptable energy consumption, under the circumstances of the achievement of real-time feedback and very little spurious triggering.

The embodiments shown here represent only examples of the present invention and may therefore not be understood to be limiting. Alternative embodiments that can be contemplated by the person skilled in the art are likewise included in the scope of the present invention.

## Claims

1. A voice recognition system for a robot system, wherein comprising:
a microphone, configured to real-timely receive a voice signal from outside;
a local voice activation detector, configured to detect the voice signal and identify whether the voice signal includes any human voice; wherein, if the voice signal includes the human voice, the local voice activation detector will output a human voice signal;
a local voice recognition module, configured to receive and identify the human voice signal output from the local voice activation detector, so as to determine whether wake-up commands are included in the human voice signal; wherein, if the human voice signal includes the wake-up commands, the local voice recognition module will output the human voice signal including the wake-up commands;
a local voice coding module, configured to code the human voice signal and to output it;
a remote voice decoding module, configured to receive and decode the human voice signal coded by the local voice coding module and output it;
a remote voice recognition module and a remote language processing module, wherein the remote voice recognition module receives and transforms the decoded human voice signal output by the remote voice decoding module, and transmits it to the remote language processing module; the remote language processing module generates corresponding operating commands based on the human voice signal which has been transformed;
an execution module, configured to execute the operating commands from the remote language processing module.

2. The voice recognition system as claimed in Claim 1, wherein the microphone is always turned on for real-timely receiving external voice signal without interruption.

3. The voice recognition system as claimed in Claim 1, wherein the voice recognition system further comprises a multimedia module configured to execute the operating command.

4. The voice recognition system as claimed in Claim 1, wherein the local voice recognition module transmits the human voice signal to the remote voice recognition module via a data stream.

5. The voice recognition system as claimed in Claim 1, wherein the voice recognition system further comprises a wake-up command edit module configured to edit the wake-up command.

6. The voice recognition system as claimed in Claim 1, wherein the local voice activation detector is a voice detector which is based on the neural network algorithm.

7. The voice recognition system as claimed in Claim 1, wherein a processing time, in which the remote language processing module generates corresponding operating command based on the human voice signal which has been transformed, is within the range of 10∼20ms.

8. A recognition process, which utilizes a voice recognition system as claimed in any one of Claims 1-7, comprising the process:
utilizing the microphone to real-timely receive a voice signal from outside;
utilizing the local voice activation detector to identify whether the voice signal includes human voice ; if the voice signal includes the human voice, the local voice activation detector will transmit it to the local voice recognition module;
utilizing the local voice recognition module to identify the human voice signal, so as to determine whether the human voice signal includes wake-up commands ; if the human voice signal includes some wake-up command, the local voice recognition module will further transmit it to the local voice coding module;
after the local voice coding module has coded the human voice signal, the local voice coding module will transmit it to the remote voice decoding module;
the remote voice decoding module decodes the received human voice signal, then transmits it to the remote voice recognition module;
utilizing the remote voice recognition module to transform the human voice signal output by the remote voice decoding module and transmit it to the remote language processing module;
the remote language processing module generates corresponding operating command based on the human voice signal which has been transformed;
the execution module is configured to execute the operating command by taking control of the multimedia module.

9. The recognition process as claimed in Claim 8, wherein if the local voice recognition module finds that current human voice signal includes the wake-up command, the local voice recognition module would be switched off, and the human voice signal would be transmitted to the remote voice decoding module directly, after coded by the local voice coding module; after decoded, it would be transmitted to the remote voice recognition module.
